# EUROPEAN PATENT APPLICATION

(11) **EP 4 763 513 A1**
(43) Date of publication of application: **24.06.2026**
(21) Application number: 25752538.6
(22) Date of filing: 06.02.2025
(51) Int. Cl.: B32B 15/08, B32B 15/04, B32B 15/20, H01M 50/105, H01M 50/126, H01M 50/121

(54) **POUCH FILM LAMINATE, POUCH-TYPE BATTERY CASE, AND POUCH-TYPE SECONDARY BATTERY**

(30) Priority: 06.02.2024 KR 20240018478; 04.02.2025 KR 20250014108
(71) Applicant: LG Energy Solution, Ltd., Seoul 07335 (KR)
(72) Inventor: KANG, Gyung Soo, Daejeon 34122 (KR); YU, Hyung Kyun, Daejeon 34122 (KR)
(74) Representative: Plasseraud IP
(86) International application number: PCT/KR2025/099307
(87) International publication number: WO 2025/170445

(57) **Abstract**

The present invention relates to a pouch film laminate including a sealant layer; a barrier layer; and a base material layer, wherein the pouch film laminate further includes a high-melting-point resin layer on at least one surface of the barrier layer, wherein the high-melting-point resin layer includes a solid-state polymer electrolyte (SPE), and the high-melting-point resin layer has a melting point higher than melting points of the sealant layer and the based material layer.

## Description

### TECHNICAL FIELD

### Cross-reference to Related Applications

This application claims priority from Korean Patent Application Nos. 10-2024-0018478, filed on February 6, 2024, and 10-2025-0014108, filed on February 4, 2025, the disclosures of which are incorporated by reference herein.

### Technical Field

The present invention relates to a pouch film laminate, a pouch type battery case, and a pouch type secondary battery.

### BACKGROUND ART

A secondary battery is generally prepared by a method in which electrode active material slurries are applied onto a positive electrode collector and a negative electrode collector to prepare a positive electrode and a negative electrode, respectively, the positive electrode and the negative electrode are stacked on both sides of a separator to form an electrode assembly having a predetermined shape, the electrode assembly is then accommodated in a pouch, and an electrolyte solution is injected.

Secondary batteries are classified into a pouch type, a can type, and the like, according to a material of a case for accommodating the electrode assembly. Among them, the pouch type secondary battery is prepared by press working of a flexible pouch film laminate to form a cup portion, accommodating the electrode assembly in the cup portion, injecting the electrolyte solution, and then sealing a sealing portion, and the can type secondary battery is prepared by accommodating the electrode assembly in a can formed of a metallic material, injecting the electrolyte solution, and then assembling a top cap on a top portion of the can to seal the can.

The pouch type secondary battery has advantages of being lightweight, having excellent space utilization, and being able to achieve high energy density by using a stacked-type electrode assembly, but has a problem of being vulnerable to external impact in comparison to the can type secondary battery.

Recently, as usage environments of the secondary batteries have diversified, excellent durability and safety even in harsh environments are required, and, accordingly, there is a need for safety against thermal propagation in the event of an actual fire as well as mechanical safety against foreign objects, such as nail penetration.

### DISCLOSURE OF THE INVENTION

### TECHNICAL PROBLEM

An aspect of the present invention relates to a pouch film laminate with excellent safety at high temperatures, heat resistance, and heat-shielding effect, a pouch type battery case, and a pouch type secondary battery.

The object of the present invention is not limited to the aforesaid, but other objects not described herein will be clearly understood by those skilled in the art from descriptions below.

### TECHNICAL SOLUTION

[1] The present invention provides a pouch film laminate including a sealant layer; a barrier layer; and a base material layer, wherein the pouch film laminate further includes a high-melting-point resin layer on at least one surface of the barrier layer, wherein the high-melting-point resin layer includes a solid-state polymer electrolyte (SPE), and the high-melting-point resin layer has a higher melting point than the sealant layer.
[2] The present invention may provide the pouch film laminate of [1] above, wherein the high-melting-point resin layer has a higher elongation than the base material layer.
[3] The present invention may provide the pouch film laminate of [1] or [2] above, wherein the solid-state polymer electrolyte (SPE) includes a lithium salt and a polymer matrix, wherein the polymer matrix includes at least one selected from the group consisting of polycarbonate, polyester, polynitrile, polyalcohol, polyamine, polysiloxane, ethylene carbonate, and fluoropolymer.
[4] The present invention may provide the pouch film laminate of [3] above, wherein the solid-state polymer electrolyte (SPE) further includes at least one of succinonitrile (SN) and ethyl cyanoacetate (CN).
[5] The present invention may provide the pouch film laminate of at least one of [1] to [4] above, wherein the high-melting-point resin layer is disposed between the sealant layer and the barrier layer and between the barrier layer and the base material layer.
[6] The present invention may provide the pouch film laminate of at least one of [1] to [5] above, wherein the high-melting-point resin layer further includes a thermosetting polymer material.
[7] The present invention may provide the pouch film laminate of [6] above, wherein the thermosetting polymer material includes at least one selected from the group consisting of a polyimide-based resin, a polyester-based resin, an epoxy-based resin, an amino-based resin, a phenol-based resin, a melamine-based resin, and a rubber-based resin.
[8] The present invention may provide the pouch film laminate of at least one of [1] to [7] above, wherein the melting point of the high-melting-point resin layer is 160°C or higher.
[9] The present invention may provide the pouch film laminate of at least one of [1] to [8] above, wherein the high-melting-point resin layer has an elongation of 300% or more.
[10] The present invention may provide the pouch film laminate of at least one of [1] to [9] above, wherein the high-melting-point resin layer has a thickness of 5 µm to 200 µm.
[11] The present invention provides a pouch type battery case including at least one cup portion recessed in one direction by forming the pouch film laminate of at least one of [1] to [10] above.
[12] The present invention provides a pouch type secondary battery including the pouch type battery case of [11] above.

### ADVANTAGEOUS EFFECTS

In a pouch film laminate according to the present invention, a sealant layer, a barrier layer, and a base material layer are sequentially laminated, and a high-melting-point resin layer including a solid-state polymer electrolyte (SPE) is disposed on at least one surface of the barrier layer. In a case in which the high-melting-point resin layer includes the solid-state polymer electrolyte (SPE) material, since it has a higher melting point than the sealant layer and has higher mechanical strength, such as elongation, than the base material layer, it may physically maintain electrical insulation while maintaining its shape as much as possible even when subjected to external impact or abnormal heat generation. Thus, it may improve safety against thermal propagation in the event of an actual fire as well as mechanical safety against foreign objects, such as nail penetration.

### BRIEF DESCRIPTION OF THE DRAWINGS

FIGS. 1 to 3 are cross-sectional views of a pouch film laminate according to an embodiment of the present invention.
FIG. 4 is an exploded perspective view of a secondary battery according to an embodiment of the present invention.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In this specification, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases.

In this specification, MD (Machine Direction) means a longitudinal direction of a pouch film laminate, and TD (Transverse Direction) means a width direction of the pouch film laminate.

The accompanying drawings illustrate preferred embodiments of the present disclosure, and together with the detailed description, serve to provide an explanation of the principle of the present disclosure, but not intended to limit the scope of the present disclosure thereto. On the other hand, the shape, size, scale or proportion of elements in the drawings as stated herein may be exaggerated for clarity.

Hereinafter, the present invention will be described in detail.

A pouch film laminate according to the present invention include at least one of configurations disclosed below, and may include any combination between technically possible configurations among the configurations below.

Demand for batteries as an energy source has been significantly increased as technology development and demand with respect to electric vehicles and energy storage systems (ESS) have increased, and accordingly, research is being conducted on batteries that may meet various needs. Particularly, research is being actively conducted on lithium secondary batteries having excellent life and cycle characteristics as well as high energy density as power sources for these devices.

However, in the lithium secondary battery, a phenomenon may occur in which temperature of an electrode is rapidly increased due to thermal and physical factors. The thermal factors include overcharging or overload due to misuse or malfunction of a charger, and, as the physical factors, the phenomenon of the rapid increase in the temperature of the electrode may occur when an internal short circuit occurs due to a contact between negative electrode and positive electrode materials which is caused by damage of a separator due to external impact. If the temperature of the electrode is rapidly increased in this way, the battery becomes very unstable due to a reaction between an electrolyte solution and lithium or generation of hydrogen and oxygen in the battery, a solvent of an electrolyte is decomposed to generate gas, and the decomposition gas of the solvent may ignite and lead to an explosion of the battery.

Recently, as usage environments of the secondary batteries have diversified, excellent durability and safety even in harsh environments are required, and, accordingly, there is a need for safety against thermal propagation in the event of an actual fire as well as mechanical safety against foreign objects, such as nail penetration.

As a result of a significant amount of research conducted to achieve excellent safety against thermal propagation in the event of an actual fire, the present inventors have found that a pouch film laminate may physically maintain electrical insulation while maintaining its shape as much as possible even when subjected to external physical impact or abnormal heat generation by further including a high-melting-point resin layer, which includes at least one of a solid-state polymer electrolyte (SPE) material having a high melting point and high mechanical strength and a thermosetting polymer material, in the pouch film laminate, thereby leading to the completion of the present invention.

### Pouch Film Laminate

A pouch film laminate according to the present invention is characterized in that it is a pouch film laminate including a sealant layer; a barrier layer; and a base material layer, wherein the pouch film laminate further includes a high-melting-point resin layer on at least one surface of the barrier layer, wherein the high-melting-point resin layer includes a solid-state polymer electrolyte (SPE), and the high-melting-point resin layer has a higher melting point than the sealant layer.

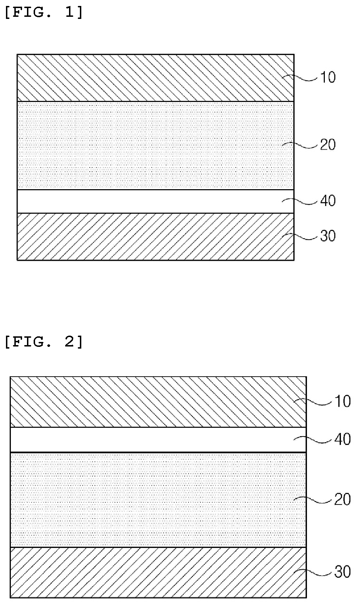

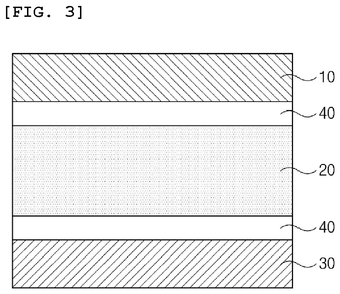

FIGS. 1 to 3 are cross-sectional views of a pouch film laminate according to an embodiment of the present invention. As an example, a sealant layer 30, a high-melting-point resin layer 40, a barrier layer 20, and a base material layer 10 may be sequentially laminated in the pouch film laminate according to the present invention. As an example, the sealant layer 30, the barrier layer 20, the high-melting-point resin layer 40, and the base material layer 10 may be sequentially laminated in the pouch film laminate according to the present invention. As an example, the sealant layer 30, the high-melting-point resin layer 40, the barrier layer 20, the high-melting-point resin layer 40, and the base material layer 10 may be sequentially laminated in the pouch film laminate according to the present invention. Hereinafter, each layer of the pouch film laminate according to the present invention will be described in detail.

### (High-Melting-Point Resin Layer)

The high-melting-point resin layer 40 is disposed on at least one surface of the barrier layer 20, and may specifically be disposed between the sealant layer 30 and the barrier layer 20 and between the barrier layer 20 and the base material layer 10. More specifically, the high-melting-point resin layer 40 may be disposed between the sealant layer 30 and the barrier layer 20 and between the barrier layer 20 and the base material layer 10.

Since the high-melting-point resin layer 40 may increase a melting point of the entire pouch film laminate and may achieve excellent mechanical strength, such as elongation, by including a solid-state polymer electrolyte (SPE), it may physically maintain electrical insulation while maintaining its shape as much as possible even when subjected to external physical impact or abnormal heat generation. Thus, it may improve safety against thermal propagation in the event of an actual fire as well as mechanical safety against foreign objects, such as nail penetration.

Specifically, since the solid-state polymer electrolyte (SPE) generally has a higher melting point than a material constituting the sealant layer, the high-melting-point resin layer including the solid-state polymer electrolyte melts later than the sealant layer, or particularly, may not melt when including a thermosetting polymer material to maintain its shape at high temperatures, and thus, it may improve thermal safety.

Also, since the high-melting-point resin layer including the solid-state polymer electrolyte (SPE) has higher mechanical strength, such as elongation, than the base material layer, it may absorb impact when subjected to external impact to maintain its shape, and thus, it may improve mechanical safety. Specifically, since the solid-state polymer electrolyte has a higher melting point than the thermosetting polymer material, it may achieve a high-melting-point resin layer with excellent mechanical strength, and, for example, the melting point of the solid-state polymer electrolyte is 180°C or higher, wherein it is higher than 160°C to 170°C which is a melting point of polypropylene mainly used in a pouch.

The solid-state polymer electrolyte (SPE) is a material in which a lithium salt dissociates in a polymer matrix to enable lithium-ion conduction. The lithium salt, for example, may be LiClO₄, LiBrF₄, LiPF₆, LiNSO₃CF₃, and LiN(SO₂CF₃)₂. The polymer matrix may include at least one selected from the group consisting of polycarbonate, polyester, polynitrile, polyalcohol, polyamine, polysiloxane, and fluoropolymer. The polymer matrix, for example, may include at least one selected from the group consisting of polyacrylonitrile (PAN), polytrimethylenecarbonate (PTMC), polycaprolactone (PCL), polyvinylidene fluoride (PVdF), poly(vinylidene fluoride)-hexafluoropropyl copolymer (PVDF-HFP), polyvinyl alcohol (PVA), polyvinyl chloride (PVC), polyoxypropylene glycol (PPG), polyethylene oxide (PEO), polymethyl methacrylate (PMMA), polyethylene carbonate (PEC), polypropylene carbonate (PPC), polydimethylsiloxane (PDMS), and polyvinyl pyrrolidine (PVP). Preferably, the solid-state polymer electrolyte (SPE) may include polypropylene carbonate.

The solid-state polymer electrolyte (SPE) may further include a nitrile group-containing compound. For example, the nitrile group-containing compound may include at least one selected from the group consisting of succinonitrile (SN) and ethyl cyanoacetate (CN). In a case in which the solid-state polymer electrolyte (SPE) further includes succinonitrile (SN) and/or ethyl cyanoacetate (CN), thermal stability of the solid-state polymer electrolyte (SPE) at high temperatures may be improved.

For example, as the solid-state polymer electrolyte (SPE), a combination of PEO, PVdF, LiClO₄, and SN is used, a combination of PAN, PVA-CN, and SN is used, a combination of PAN and SN is used, or a combination of PVA-CN and acrylonitrile may be used.

The high-melting-point resin layer 40 may further include a thermosetting polymer material. The thermosetting polymer material means a polymer material which exhibits a hardening phenomenon, in which it hardens by forming a crosslinked structure within a polymer chain when heated to a high temperature, and has a melting point higher than a decomposition temperature. The thermosetting polymer material, for example, may include at least one selected from the group consisting of a polyimide-based resin, a polyester-based resin, an epoxy-based resin, an amino-based resin, a phenol-based resin, a melamine-based resin, and a rubber-based resin. Preferably, the thermosetting polymer material may include at least one selected from the group consisting of a polyimide-based resin, an epoxy-based resin, and a melamine-based resin. Preferably, the thermosetting polymer material may include a polyimide-based resin.

Since the high-melting-point resin layer 40 includes both the solid-state polymer electrolyte (SPE) and the thermosetting polymer material, an effect of improving both thermal safety and mechanical durability of the pouch film laminate may be obtained.

The high-melting-point resin layer 40 is characterized by having a melting point higher than melting points of the sealant layer 30 and the base material layer 10. The melting point of the high-melting-point resin layer 40 may be 160°C or higher, particularly 200°C or higher, and more particularly 240°C or higher, and the melting point of the high-melting-point resin layer 40 may also be 210°C or less, particularly 200°C or less, and more particularly 195°C or less. When the melting point of the high-melting-point resin layer 40 satisfies the above range, a high-melting-point resin layer with excellent processability as well as excellent thermal safety may be achieved.

The high-melting-point resin layer 40 may have a value of elongation greater than elongation of the base material layer 10. The elongation of the high-melting-point resin layer 40 may be 300% or more, particularly 400%, and more particularly 500% or more. When the elongation of the high-melting-point resin layer 40 satisfies the above range, a high-melting-point resin layer having excellent processability and mechanical durability may be achieved.

In a case in which the melting point and the elongation of the high-melting-point resin layer 40 satisfy the above ranges, there is an effect of physically maintaining electrical insulation while maintaining its shape as much as possible even when subjected to external physical impact or abnormal heat generation.

The high-melting-point resin layer 40 may have a thickness of 5 µm to 200 µm, preferably 8 µm to 150 µm, and more preferably 10 µm to 120 µm. In a case in which the thickness of the high-melting-point resin layer 40 is excessively thin, an effect of mitigating the external impact is insignificant and it may be weak against thermal propagation at high temperatures, and, in a case in which the thickness is excessively thick, an increase in thickness of a case may cause a problem of reduced energy density (ED) due to increases in volume and weight of the battery.

### (Base Material Layer)

The base material layer 10 is disposed as an outermost layer of a pouch type battery case 100 to protect an electrode assembly from external impact and electrically insulate the electrode assembly.

The base material layer 10 may be formed of a polymer material, and, for example, may be formed of at least one polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon.

The base material layer 10 may have a single-layer structure, or may have a multilayer structure in which different polymer films are laminated. In a case in which the base material layer 10 has the multilayer structure, an adhesive layer may be disposed between the polymer films.

The base material layer 10 may have a total thickness of 10 µm to 60 µm, preferably 15 µm to 50 µm, and more preferably 20 µm to 40 µm. In the case that the base material layer 10 has the multilayer structure, the above thickness is a thickness including the adhesive layer. When the thickness of the base material layer 10 satisfies the above range, durability, insulation properties, and formability are excellent. If the thickness of the base material layer 10 is excessively thin, the durability may be reduced and the base material layer may be damaged during a forming process, and, if the thickness is excessively thick, the formability may be reduced, a total thickness of the pouch may be increased, and a battery accommodation space may be reduced to decrease the energy density.

According to an embodiment, the base material layer 10 may have a laminated structure of a polyethylene terephthalate (PET) film and a Nylon film. In this case, it is desirable that the Nylon film is disposed toward the barrier layer 20, i.e., on an inner side, and the polyethylene terephthalate film is disposed toward a surface of the pouch.

Since polyethylene terephthalate (PET) has excellent durability and electrical insulation properties, the durability and insulation properties are excellent when the PET film is disposed toward the surface. However, with respect to the PET film, since adhesion to an aluminum alloy thin film constituting the barrier layer 20 is weak and a stretching behavior is also different, when the PET film is disposed toward the barrier layer 20, delamination between the base material layer and the barrier layer 20 may occur during the forming process and a problem may occur in which the formability is reduced because the barrier layer 20 is not stretched uniformly. In contrast, since the Nylon film has a similar stretching behavior to the aluminum alloy thin film constituting the barrier layer 20, an effect of improving the formability may be obtained when the Nylon film is disposed between the polyethylene terephthalate and the barrier layer 20.

The polyethylene terephthalate film may have a thickness of 5 µm to 20 µm, preferably 5 µm to 15 µm, and more preferably 7 µm to 15 µm, and the Nylon film may have a thickness of 10 µm to 40 µm, preferably 10 µm to 35 µm, and more preferably 15 µm to 25 µm. When the thicknesses of the polyethylene terephthalate film and the Nylon film satisfy the above ranges, the formability and stiffness after forming are excellent.

### (Barrier Layer)

The barrier layer 20 is to secure mechanical strength of the pouch, block incoming and outgoing of gas or moisture from the outside of the secondary battery, and prevent leakage of an electrolyte.

The barrier layer 20 may have a thickness of 30 µm to 120 µm, preferably 40 µm to 100 µm, and more preferably 40 µm to 80 µm. In a case in which the thickness of the barrier layer 20 satisfies the above range, since the formability is improved, a cup portion forming depth is increased or occurrence of cracks and/or pinholes is reduced even when two cups are formed, and thus, resistance to external stress after forming is improved.

The barrier layer 20 may be formed of a metallic material, and may specifically be formed of an aluminum alloy thin film.

The aluminum alloy thin film may include aluminum and a metal element other than the aluminum, for example, at least one selected from the group consisting of iron (Fe), copper (Cu), chromium (Cr), manganese (Mn), nickel (Ni), magnesium (Mg), silicon (Si), and zinc (Zn).

### (Sealant Layer)

The sealant layer 30 is for sealing the pouch by being bonded through thermal compression, wherein it is disposed as an innermost layer of the pouch film laminate.

The sealant layer 30 must have insulation properties and corrosion resistance because it is a surface that is in contact with the electrolyte and the electrode assembly after the pouch is formed, and, since the sealant layer completely seals the inside to block material movement between the inside/the outside, it must have high sealing properties.

The sealant layer 30 may be formed of a polymer material, and, for example, may be formed of at least one selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, and Teflon, and, among them, it is particularly desirable to include polypropylene (PP) which has excellent mechanical properties, such as tensile strength, stiffness, surface hardness, wear resistance, and heat resistance, and excellent chemical properties such as corrosion resistance.

More specifically, the sealant layer 30 may include polypropylene, cast polypropylene (CPP), acid modified polypropylene, a polypropylene-butylene-ethylene copolymer, or a combination thereof.

The sealant layer 30 may have a single-layer structure, or may have a multilayer structure including two or more layers formed of different polymer materials.

The sealant layer 30 may have a total thickness of 60 µm to 100 µm, preferably 60 µm to 90 µm, and more preferably 70 µm to 90 µm. If the thickness of the sealant layer 30 is excessively thin, sealing durability and insulation properties may be reduced, and, if the thickness is excessively thick, flexibility may be reduced and a total thickness of the pouch film laminate may be increased to decrease volumetric energy density.

The pouch film laminate according to the present invention may be prepared by a method of preparing a pouch film laminate which is known in the art. For example, the pouch film laminate according to the present invention may be prepared by a method of attaching the high-melting-point resin layer 40 to one surface of the barrier layer 20 using an adhesive, attaching the base material layer 10 to one surface of the high-melting-point resin layer 40 using an adhesive, and then forming the sealant layer 30 on the other surface of the barrier layer 20 using co-extrusion or an adhesive, but the present invention is not limited thereto.

### Pouch Type Battery Case

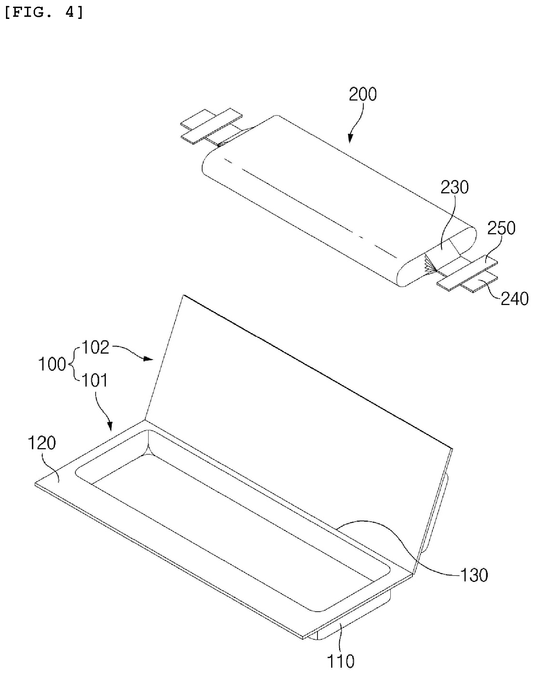

FIG. 4 is an exploded perspective view of a pouch type secondary battery according to the present invention. Hereinafter, a secondary battery according to an embodiment of the present invention will be described in more detail with reference to FIG. 4.

The pouch type battery case 100 is a battery case for accommodating an electrode assembly 200 and an electrolyte (not shown), wherein it includes a base material layer, a barrier layer, a high-melting-point resin layer, and a sealant layer, as a pouch film laminate, and includes at least one cup portion (accommodation portion) 110 that is recessed in one direction. Since detailed configuration and physical properties of the pouch film laminate are the same as described above, a detailed description is omitted.

Specifically, the pouch type battery case 100 has flexibility and may be prepared by a method in which a cup portion having a shape recessed in one direction is formed by inserting a pouch film laminate, in which a base material layer, a barrier layer, a high-melting point resin layer, and a sealant layer are sequentially laminated, into a press-forming device, and applying pressure with a punch to a region of the pouch film laminate to stretch it.

The pouch type battery case 100 of the present invention, which is prepared by the above-described method, includes a lower case 101, an upper case 102, and a folding portion 130 connecting the lower case and the upper case, wherein the upper case and/or the lower case includes the cup portion 110 having a shape recessed in one direction.

Specifically, the pouch type battery case 100 according to the present invention may be a single-cup type, in which the cup portion 110 is formed only in the lower case 101, as illustrated in FIG. 4, but is not limited thereto, and may also be a double-cup type in which cup portions are formed in both the upper case and the lower case. With respect to a double-cup type pouch, since the upper case is folded such that the cup portion of the upper case and the cup portion of the lower case face each other after accommodating the electrode assembly and the electrolyte, a thicker electrode assembly may be accommodated in comparison to a single-cup type pouch, and accordingly, there is an advantage in that it is advantageous in achieving high energy density.

The cup portion 110 has an accommodation space for accommodating the electrode assembly 200. The pouch type battery case 100 may include a terrace 120 around the cup portion 110. The terrace 120 refers to an unformed portion of the pouch film laminate, that is, a remaining region excluding the cup portion 110. The terrace 120 is a portion that is sealed through thermal bonding in a process of accommodating the electrode assembly 200 in the cup portion 110, injecting the electrolyte solution, and then sealing.

The cup portion 110 may include a bottom surface and a circumferential surface. The circumferential surface may connect the bottom surface and the terrace 120. A plurality of circumferential surfaces, more specifically, four circumferential surfaces may be included. The bottom surface may cover one surface of the electrode assembly 200, and the circumferential surface may surround a perimeter of the electrode assembly 200.

The folding portion 130 connects the lower case 101 and the upper case 102, and is folded to allow the upper case 102 to seal the cup portion 110 of the lower case 101, after the electrode assembly 200 is accommodated in the cup portion 110 and the electrolyte solution is injected. In a case in which the folding portion 130 is included, since the lower case 101 and the upper case 102 are connected as one piece, the number of sides to be sealed is reduced when a sealing process is performed later, and thus, there is an effect of improving processability.

The folding portion 130 is formed spaced apart from the cup portion 110, and a distance between the folding portion 130 and the cup portion 110 may be in a range of 0.5 mm to 3 mm, preferably, about 0.5 mm to about 2 mm. If the folding portion 130 is formed too close to the cup portion 110, folding is not performed smoothly, and if the folding portion 130 is formed too far from the cup portion 110, a total volume of the secondary battery may be increased to decrease the volumetric energy density. With respect to the double-cup type case, the folding portion may be formed to satisfy the above distance for each cup portion.

### Pouch Type Secondary Battery

Next, a pouch type secondary battery according to the present invention will be described.

The pouch type secondary battery according to the present invention may include the pouch type battery case 100 prepared by forming the above-described pouch film laminate, and the electrode assembly 200 accommodated in the pouch type battery case 100. Since detailed configuration and physical properties of the pouch type battery case 100 are the same as described above, a detailed description is omitted. Specifically, the pouch type secondary battery according to the present invention may include the pouch type battery case 100, the electrode assembly 200, an electrode tab 230, a lead 240, an insulating portion 250, and an electrolyte (not shown).

### (Electrode Assembly)

The electrode assembly 200 may be inserted into the pouch type battery case 100 and may be sealed by the pouch type battery case 100 after the injection of the electrolyte.

The electrode assembly 200 may include a plurality of electrodes and a plurality of separators which are alternatingly stacked. The plurality of electrodes are alternatingly stacked having a separator disposed therebetween and may include a positive electrode and a negative electrode which have opposite polarities.

Also, the electrode assembly 200 may include a plurality of electrode tabs 230 welded to each other. The plurality of electrode tabs 230 may be connected to the plurality of electrodes, and may protrude from the electrode assembly 200 to the outside so that they may act as a path through which electrons may move between the inside and the outside of the electrode assembly 200. The plurality of electrode tabs 230 may be disposed inside the pouch type battery case 100.

The electrode tab 230 connected to the positive electrode and the electrode tab 230 connected to the negative electrode may protrude in different directions with respect to the electrode assembly 200. However, the present invention is not limited thereto, and it is also possible for the electrode tab 230 connected to the positive electrode and the electrode tab 230 connected to the negative electrode to protrude in the same direction side by side.

The lead 240, which supplies electricity to the outside of the secondary battery, may be connected to the plurality of electrode tabs 230 by spot welding or the like. One end of the lead 240 is connected to the plurality of electrode tabs 230 and the other end of the lead 240 may protrude to the outside of the pouch type battery case 100.

A portion of the lead 240 may be surrounded by an insulating portion 250. For example, the insulating portion 250 may include an insulating tape. The insulating portion 250 may be disposed between the terrace 120 of the lower case 101 and the upper case 102, and in this state, the terrace 120 and the upper case 102 may be heat-fused to each other. In this case, a portion of the terrace 120 and the upper case 102 may be heat-fused to the insulating portion 250. Thus, the insulating portion 250 prevents flow of the electricity generated from the electrode assembly 200 to the pouch type battery case 100 through the lead 240, and may maintain sealing of the pouch type battery case 100.

### (Electrolyte)

The electrolyte is for moving lithium ions that are generated by an electrochemical reaction of the electrode during charge and discharge of the secondary battery, wherein it may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

A pouch film laminate having a structure, in which polyethylene terephthalate (thickness: 12 µm)/nylon (thickness: 25 µm)/an Al alloy thin film (thickness: 60 µm)/a high-melting-point resin layer (polypropylene carbonate (PCC), lithium lanthanum tantalum zirconate (LLZTO), anhydrous acetonitrile, thickness: 40 µm)/cast polypropylene (thickness: 40 µm) were sequentially laminated, was prepared.

### Example 2

A pouch film laminate having a structure, in which polyethylene terephthalate (thickness: 12 µm)/nylon (thickness: 25 µm)/a high-melting-point resin layer (polypropylene carbonate (PCC), lithium lanthanum tantalum zirconate (LLZTO), anhydrous acetonitrile, thickness: 40 µm)/an Al alloy thin film (thickness: 60 µm)/cast polypropylene (thickness: 40 µm) were sequentially laminated, was prepared.

### Example 3

A pouch film laminate having a structure, in which polyethylene terephthalate (thickness: 12 µm)/nylon (thickness: 25 µm)/a high-melting-point resin layer (polypropylene carbonate (PCC), lithium lanthanum tantalum zirconate (LLZTO), anhydrous acetonitrile, thickness: 40 µm)/an Al alloy thin film (thickness: 60 µm)/a high-melting-point resin layer (polyimide, thickness: 20 µm)/cast polypropylene (thickness: 20 µm) were sequentially laminated, was prepared.

### Comparative Example 1

A pouch film laminate having a structure, in which polyethylene terephthalate (thickness: 12 µm)/nylon (thickness: 25 µm)/an Al alloy thin film (thickness: 60 µm)/ cast polypropylene (thickness: 80 µm) were sequentially laminated, was prepared.

### Comparative Example 2

A pouch film laminate having a structure, in which polyethylene terephthalate (thickness: 12 µm)/nylon (thickness: 25 µm)/an Al alloy thin film (thickness: 60 µm)/a high-melting-point resin layer (polyimide, thickness: 40 µm)/cast polypropylene (thickness: 40 µm) were sequentially laminated, was prepared.

### Comparative Example 3

A pouch film laminate having a structure, in which polyethylene terephthalate (thickness: 12 µm)/nylon (thickness: 25 µm)/a high-melting-point resin layer (polyimide, thickness: 40 µm)/an Al alloy thin film (thickness: 60 µm)/cast polypropylene (thickness: 40 µm) were sequentially laminated, was prepared.

### Experimental Example 1

A pouch type battery case, in which a cup portion was formed, was prepared by using each of the pouch film laminates prepared in Examples 1 to 3 and Comparative Examples 1 to 3.

After a stacked type electrode assembly having an overall length of 330 mm, an overall width of 115 mm, and a weight of 700 g was accommodated in the cup portion, an electrolyte solution was injected, the pouch type battery case was then sealed, and a formation process was performed to prepare a pouch type secondary battery.

For the pouch type secondary battery prepared as described above, experiments were performed on 1) prevention of fire risk from thermal runaway, 2) time delay effect against thermal propagation, and 3) mechanical safety against foreign objects, such as nail penetration. Experimental results are presented in [Table 1] below. In this case, in [Table 1], the mark "⊚" indicates very good, the mark "o" indicates good, the mark "Δ" indicates average, and the mark "X" indicates poor.

Specifically, experimental methods for 1) prevention of fire risk from thermal runaway, 2) time delay effect against thermal propagation, and 3) mechanical safety during nail penetration are as follows.
1) Five of the above-prepared battery cells were assembled into a single module, and a heating pad was attached to one of the battery cells to apply heat at a rate of 0.5°C/sec. Occurrence or non-occurrence of ignition in the battery cell to which the heating pad was attached was observed. In this case, the longer the delay in the time until the ignition (fire or smoke) first occurs, the better it is evaluated.
2) Five of the above-prepared battery cells were assembled into a single module, and a heating pad was attached to one of the battery cells to apply heat at a rate of 0.5°C/sec. In this case, the longer the time it takes for the heat to propagate, the better it is evaluated by measuring the heat transferred to the adjacent cells using a thermocouple.
3) After a nail with a diameter of 3 mm was used to penetrate the center of the above-prepared battery cell at a speed of 0.1 mm/s, occurrence or non-occurrence of ignition was observed. In this case, the longer the delay in the time until the ignition (fire or smoke) first occurs, the better it is evaluated.

**[Table 1]**

| | 1) prevention of fire risk from thermal runaway | 2) time delay effect against thermal propagation | 3) safety against nail penetration |
|---|---|---|---|
| Example 1 | ○ | ○ | ○ |
| Example 2 | ○ | ○ | ○ |
| Example 3 | ⊚ | ⊚ | ○ |
| Comparative Example 1 | X | X | X |
| Comparative Example 2 | ○ | ○ | Δ |
| Comparative Example 3 | ○ | ○ | Δ |

From [Table 1], it may be confirmed that, with respect to the pouch type secondary batteries including the pouch film laminates prepared by Examples 1 to 3, 1) prevention of fire risk from thermal runaway, 2) time delay effect against thermal propagation, and 3) mechanical safety during nail penetration were all good.

In contrast, it may be confirmed that, with respect to the pouch type secondary battery of Comparative Example 1, which did not include a high-melting-point resin layer, all of 1) prevention of fire risk from thermal runaway, 2) time delay effect against thermal propagation, and 3) mechanical safety during nail penetration were significantly inferior to the pouch type secondary batteries of Examples 1 to 3.

Also, it may be confirmed that the pouch type secondary batteries of Comparative Examples 2 and 3, which did not include a solid-state polymer electrolyte, had inferior mechanical safety to the pouch type secondary batteries of Examples 1 to 3.

### (Description of the Symbols)

- 10:: Base Material Layer
- 20:: Barrier Layer
- 30:: Sealant Layer
- 40:: High-Melting-Point Resin Layer
- 100:: Pouch Type Battery Case
- 101:: Lower Case
- 102:: Upper Case
- 110:: Cup Portion
- 120:: Terrace
- 130:: Folding Portion
- 200:: Electrode Assembly
- 230:: Electrode Tab
- 240:: Lead
- 250:: Insulating Portion

## Claims

1. A pouch film laminate comprising a sealant layer; a barrier layer; and a base material layer,
wherein the pouch film laminate further comprises a high-melting-point resin layer on at least one surface of the barrier layer,
wherein the high-melting-point resin layer comprises a solid-state polymer electrolyte (SPE), and
the high-melting-point resin layer has a higher melting point than the sealant layer.

2. The pouch film laminate of claim 1, wherein the high-melting-point resin layer has a higher elongation than the base material layer.

3. The pouch film laminate of claim 1, wherein the solid-state polymer electrolyte (SPE) comprises a lithium salt and a polymer matrix,
wherein the polymer matrix comprises at least one selected from the group consisting of polycarbonate, polyester, polynitrile, polyalcohol, polyamine, polysiloxane, and fluoropolymer.

4. The pouch film laminate of claim 3, wherein the solid-state polymer electrolyte (SPE) further comprises at least one of succinonitrile (SN) and ethyl cyanoacetate (CN).

5. The pouch film laminate of claim 1, wherein the high-melting-point resin layer is disposed between the sealant layer and the barrier layer and between the barrier layer and the base material layer.

6. The pouch film laminate of claim 1, wherein the high-melting-point resin layer further comprises a thermosetting polymer material.

7. The pouch film laminate of claim 6, wherein the thermosetting polymer material comprises at least one selected from the group consisting of a polyimide-based resin, a polyester-based resin, an epoxy-based resin, an amino-based resin, a phenol-based resin, a melamine-based resin, and a rubber-based resin.

8. The pouch film laminate of claim 1, wherein the melting point of the high-melting-point resin layer is 160°C or higher.

9. The pouch film laminate of claim 1, wherein the high-melting-point resin layer has an elongation of 300% or more.

10. The pouch film laminate of claim 1, wherein the high-melting-point resin layer has a thickness of 5 µm to 200 µm.

11. A pouch type battery case comprising at least one cup portion recessed in one direction by forming the pouch film laminate of any one of claims 1 to 10.

12. A pouch type secondary battery comprising the pouch type battery case of claim 11.
